# EUROPÄISCHE PATENTSCHRIFT

(11) **EP 1 325 214 B1**
(45) Veröffentlichungstag und Bekanntmachung des Hinweises auf die Patenterteilung: **23.06.2004**
(21) Anmeldenummer: 01983454.8
(22) Anmeldetag: 28.08.2001
(51) Int. Cl.: F01L 1/34, F02B 75/22, F02D 13/02

(54) **VERFAHREN ZUM GLEICHZEITIGEN VERSTELLEN VON NOCKENWELLEN VERSCHIEDENER ZYLINDERBÄNKE EINER BRENNKRAFTMASCHINE**
METHOD FOR SIMULTANEOUSLY MOVING CAM SHAFTS OF VARIOUS CYLINDER BANKS PERTAINING TO AN INTERNAL COMBUSTION ENGINE
PROCEDE DE DECALAGE SIMULTANE D'ARBRES A CAMES DE DIFFERENTES RANGEES DE CYLINDRES D'UN MOTEUR A COMBUSTION INTERNE

(30) Priorität: 27.09.2000 DE 10047819
(43) Veröffentlichungstag der Anmeldung: 09.07.2003
(73) Patentinhaber: Volkswagen Aktiengesellschaft, 38436 Wolfsburg (DE)
(72) Erfinder: SCHNAUBELT, Michael, D-37242 Allendorf (DE); SCHULTALBERS, Matthias, D-38536 Meinersen/Ahnsen (DE); SCHEFFER, Norbert, D-38518 Gifhorn (DE); GAO, Hua, D-38444 Wolfsburg (DE)
(86) Internationale Anmeldenummer: PCT/EP2001/009896
(87) Internationale Veröffentlichungsnummer: WO 2002/027156

(56) Entgegenhaltungen:
- DE-A- 19 832 383
- PATENT ABSTRACTS OF JAPAN vol. 1997, no. 02, 28. Februar 1997 (1997-02-28) & JP 08 270469 A (TOYOTA MOTOR CORP), 15. Oktober 1996 (1996-10-15)
- PATENT ABSTRACTS OF JAPAN vol. 1998, no. 12, 31. Oktober 1998 (1998-10-31) & JP 10 196418 A (TOYOTA MOTOR CORP), 28. Juli 1998 (1998-07-28)

## Beschreibung

Die Erfindung betrifft ein Verfahren zum gleichzeitigen Verstellen von Nockenwellen verschiedener Zylinderbänke einer Brennkraftmaschine relativ zu einer Kurbelwelle auf einen vorbestimmten Winkelsollwert, wobei die Nockenwellen jeweilige Ein- bzw. Auslaßventile entsprechender Zylinderbänke der Brennkraftmaschine betätigen, gemäß dem Oberbegriff des Anspruchs 1. Die Erfindung betrifft ferner eine Brennkraftmaschine mit wenigstens zwei Zylinderbänken und einer Ventilsteuerung für jede Zylinderbank mit jeweils wenigstens einer Nockenwelle zum Betätigen von Auslaß- und/oder Einlaßventilen der jeweiligen Zylinderbank, wobei jeweils wenigstens eine Nockenwelle einer Zylinderbank mittels eines Nockenwellenstellers in ihrem Winkel bzgl. einer Kurbelwelle der Brennkraftmaschine verstellbar ist, wobei ein Steuergerät vorgesehen ist, welches die Verstellung der Nockenwellen in Abhängigkeit von einem vorbestimmten Sollwert ausführt, gemäß dem Oberbegriff des Anspruchs 9.

Bei Brennkraftmaschinen mit mehreren Zylinderbänken, wie einem aus der DE 198 32 383 A1 bekannten, ventilgesteuerten Mehrreihenmotor, mit jeweiligen Nockenwellen, welche mittels eines Nockenwellenstellers in ihrem Winkel bzgl. der Kurbelwelle verstellbar sind, ergibt sich bei niedrigen Betriebstemperaturen, wie beispielsweise in einer Kaltstartphase, das Problem, daß sich unterschiedliche Verstellgeschwindigkeiten für die Nockenwellen verschiedener Zylinderbänke ergeben. Dies würde jedoch zu unerwünschten Differenzen zwischen den jeweiligen Winkelstellungen der Nockenwellen relativ zur Kurbelwelle führen. Aus diesem Grund wird bisher eine Nockenwellenverstellung erst dann zugelassen, wenn die Brennkraftmaschine ihre Betriebstemperatur erreicht hat.

Aus der US 5 462 022 ist eine Nockenwellenverstellung bekannt, bei der eine gewünschte Winkelstellung zwischen Nockenwelle und Kurbelwelle eingeregelt wird.

Der vorliegenden Erfindung liegt die Aufgabe zugrunde, ein Verfahren und eine Brennkraftmaschine der obengenannten Art zur Verfügung zu stellen, wobei eine Verstellung von Nockenwellen verschiedener Zylinderbänke unabhängig von einer Temperatur der Brennkraftmaschine synchronisiert erfolgt.

Diese Aufgabe wird erfindungsgemäß durch ein Verfahren der o. g. Art mit den in Anspruch 1 gekennzeichneten Merkmalen und durch eine Brennkraftmaschine der o. g.

Art mit den in Anspruch 9 gekennzeichneten Merkmalen gelöst. Vorteilhafte Ausgestaltungen der Erfindung sind in den abhängigen Ansprüchen angegeben.

Dazu ist es bei einem Verfahren der o. g. Art erfindungsgemäß vorgesehen, daß eine Differenz von Verstellgeschwindigkeiten jeweiliger Winkelistwerte der Nockenwellen erfaßt wird und der Winkelsollwert wenigstens einer Nockenwelle mit höherer Verstellgeschwindigkeit zeitlich verändert wird, bis die Winkelistwerte der Nockenwellen den ursprünglichen Winkelsollwert erreicht haben, wobei die zeitliche Veränderung des Winkelsollwertes für die Nockenwelle mit höherer Verstellgeschwindigkeit derart erfolgt, daß eine Divergenz von Winkelistwerten zwischen der Nockenwelle mit höherer Verstellgeschwindigkeit und derjenigen Nockenwelle mit niedrigster Verstellgeschwindigkeit gestoppt und eine entsprechende Differenz zwischen diesen Winkelistwerten verringert wird.

Ferner ist es bei einer Brennkraftmaschine der o. g. Art erfindungsgemäß vorgesehen, daß das Steuergerät derart ausgebildet ist, daß es eine Differenz von Verstellgeschwindigkeiten der Nockenwellensteller erfaßt und den Winkelsollwert wenigstens eines Nockenwellenstellers mit höherer Verstellgeschwindigkeit zeitlich verändert bis die Nockenwellensteller den ursprünglichen Winkelsollwert erreicht haben, wobei die zeitliche Veränderung des Winkelsollwertes für den Nockenwellensteller mit höherer Verstellgeschwindigkeit derart erfolgt, daß eine Divergenz von Winkelistwerten zwischen dem Nockenwellensteller mit höherer Verstellgeschwindigkeit und demjenigen Nockenwellensteller mit niedrigster Verstellgeschwindigkeit stoppt und sich eine entsprechende Differenz zwischen diesen Winkelistwerten verringert.

Dies hat den Vorteil, daß sich bei niedrigen Betriebstemperaturen der Brennkraftmaschine ergebende Differenzen zwischen den Verstellgeschwindigkeiten der Nockenwellen ausgeglichen werden. Mit anderen Worten werden die Nockenwellen miteinander synchronisiert. Dies verhindert unerwünschte Differenzen zwischen den Winkelstellungen der Nockenwellen bzgl. der Kurbelwelle, die sich insbesondere auf das Fahrverhalten der Brennkraftmaschine negativ auswirken. Dadurch ist es möglich eine Nockenwellenverstellung bei Brennkraftmaschinen mit mehreren Zylinderbänken auch bei niedrigen Betriebstemperaturen durchzuführen.

Um die Veränderung des Winkelsollwertes unabhängig von der Differenz der Verstellgeschwindigkeiten immer zu einem optimalen Zeitpunkt zu beginnen, bei dem diejenige Nockenwelle mit höherer Verstellgeschwindigkeit mit ausreichender Sicherheit bestimmt werden kann, wird die Veränderung des Winkelsollwertes der Nockenwelle mit höherer Verstellgeschwindigkeit erst ab einem Zeitpunkt durchgeführt, bei dem sich zwischen den Winkelistwerten der Nockenwelle mit höherer Verstellgeschwindigkeit und der Nockenwelle mit niedrigster Verstellgeschwindigkeit eine vorbestimmte Differenz einstellt.

Zum Stoppen des Auseinanderlaufens bzw. Divergierens der Winkelistwerte der Nockenwellen mit unterschiedlichen Verstellgeschwindigkeiten wird zunächst am Beginn der Veränderung des Winkelsollwertes dieser auf den momentanen Winkelistwert der Nockenwelle mit höherer Verstellgeschwindigkeit als Anfangswert gesetzt. Um ein Schwingen des Winkelistwertes der Nockenwelle mit höherer Verstellgeschwindigkeit über den veränderten Winkelsollwert hinaus zu verhindern wird dem momentanen Winkelistwert ein Prädiktionswinkel hinzu addiert, der einem Nachlaufen des Winkelistwertes der Nockenwelle mit höherer Verstellgeschwindigkeit nach dem ersten Verändern des Winkelsollwertes für diese Nockenwelle mit höherer Verstellgeschwindigkeit entspricht.

Für eine optimale Rückführung des Winkelistwertes der Nockenwelle mit höherer Verstellgeschwindigkeit auf den Winkelistwert der Nockenwelle mit niedrigster Verstellgeschwindigkeit wird der veränderte Winkelsollwert in seinem Betrag als Summe aus dem momentanen Winkelistwert der Nockenwelle mit niedrigster Verstellgeschwindigkeit und einer zeitabhängigen Funktion bestimmt, deren Betrag sich mit der Zeit einer vorbestimmten Konstanten nähert. Dies zeitabhängige Funktion ist beispielsweise eine PT1-Funktion, wobei deren Kenngrößen am Beginn der Veränderung des Winkelsollwertes bevorzugt in Abhängigkeit von einer Temperatur der Brennkraftmaschine und einem Anfangswert des veränderten Winkelsollwertes bestimmt werden.

Zweckmäßigerweise wird die Veränderung des Winkelsollwertes der Nockenwelle mit höherer Verstellgeschwindigkeit nur dann durchgeführt, wenn eine Temperatur der Brennkraftmaschine unterhalb einer vorbestimmten Temperatur liegt.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine bevorzugte Ausführungsform einer erfindungsgemäßen Brennkraftmaschine in schematischer Frontansicht,
- Fig. 2: ein Blockschaltbild eines erfindungsgemäß ausgebildeten Teils einer Steuereinrichtung zum synchronisierten Verstellen von Nockenwellen,
- Fig. 3: eine schematische Darstellung einer PT1-Funktion und
- Fig. 4: eine schematische Darstellung von Winkelistwerten und Winkelsollwerten der Nockenwellen während einer Verstellung mit positivem Sprung des relativen Kurbelwinkels zwischen Kurbelwelle und Nockenwellen.

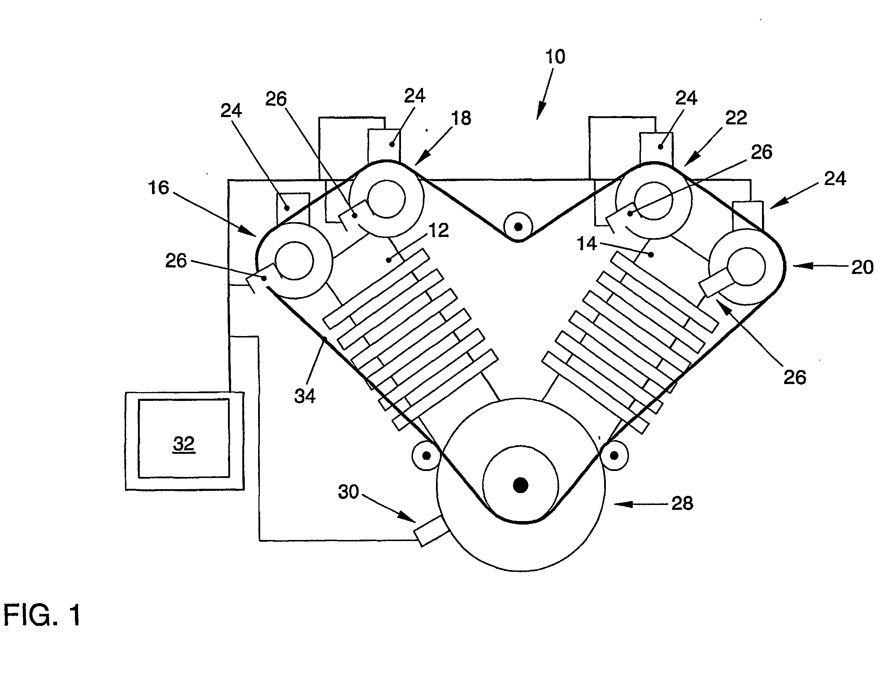

Die in Fig. 1 schematisch veranschaulichte Brennkraftmaschine 10 umfaßt zwei Zylinderbänke 12 und 14, eine Auslaßnockenwelle 16 sowie eine Einlaßnockenwelle 18 der ersten Zylinderbank 12, eine Auslaßnockenwelle 20 sowie eine Einlaßnockenwelle 22 der zweiten Zylinderbank 14, jeweilige Nockenwellensteller 24, Nockenwellensensoren 26, eine Kurbelwelle 28 und einen Kurbelwellensensor 30. Ein Steuergerät 32 empfängt Signale der Sensoren 26, 30 und bestromt die Nockenwellensteller 24 entsprechend, so daß sich ein gewünschter Winkelsollwert für eine relative Winkelstellung zwischen den Nockenwellen 16, 18, 20, 22 und der Kurbelwelle 28 einstellt. Die Nockenwellen 16, 18, 20, 22 werden über einen Trieb 34 von der Kurbelwelle 28 angetrieben.

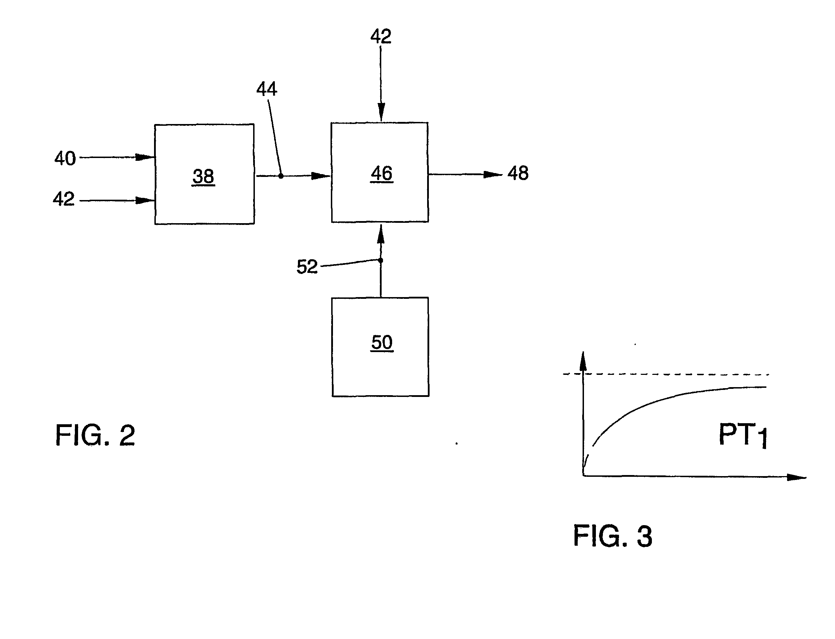

Erfindungsgemäß ist eine Synchronisation der Nockenwellen 16, 18, 20, 22 verschiedener Zylinderbänke 12, 14 vorgesehen. Wenn beispielsweise die Einlaßnockenwellen 18 und 22 der beiden Zylinderbänke 12, 14 gleichzeitig auf einen neuen Winkelsollwert relativ zur Kurbelwelle 28 eingestellt werden sollen, so erfolgt dies mittels der Nockenweilensteller 24 hydraulisch. Hierbei kann es jedoch durch die hydraulische Betätigung der Nockenwellensteller in bestimmten Betriebssituationen zu unterschiedlichen Verstellgeschwindigkeiten der momentanen Winkelistwerte der Nockenwellensteller 24 und damit der Nockenwellen 18, 22 kommen. Dies führt zu einem Divergieren der momentanen Winkelistwerte der Nockenwellen während der Verstellung auf den neuen Winkelsollwert. Mit anderen Worten kann es vorkommen, daß einer der Nockenwellensteller schneller verstellt als der andere. Zwar erreichen beide Nockenwellen 18, 22 letztlich den gleichen Winkelsollwert, jedoch erreicht eine Nockenwelle diesen früher als die andere. Die sich in dieser Zeitspanne ergebende Differenz zwischen den jeweiligen relativen Winkeln der Nockenwelle bzgl. der Kurbelwelle wirken sich jedoch negativ auf den Motorlauf und Schadstoffemissionen aus. Erfindungsgemäß wird nunmehr eine Synchronisation gemäß folgendem Verfahren vorgeschlagen, welches anhand des Blockschaltbildes von Fig. 2, das einen Teil des Steuergerätes 32 dargestellt, erläutert wird. Dies erfolgt beispielhaft für die Einlaßnockenwellen 18 und 22, gilt jedoch analog auch für die Auslaßnockenwellen 16, 20. Ferner erfolgt die nachfolgende Beschreibung beispielhaft für zwei Nockenwellen, von denen eine schneller Verstellt wird als die andere. Dies gilt jedoch auch analog für die gleichzeitige Verstellung von drei oder mehr Nockenwellen von drei oder mehr Zylinderbänken, wobei die nachfolgende Erörterung auf jede Paarung der Nockenwelle mit niedrigster Verstellgeschwindigkeit mit jeder anderen Nockenwelle mit höherer Verstellgeschwindigkeit anzuwenden sind. Ferner bezieht sich die nachfolgende Erläuterung beispielhaft auf einen "positiven Sprung" des Winkelsollwertes, d.h. es wird ein höherer Relativwinkel bzgl. der Kurbelwelle 28 angefahren. Die Erläuterungen gelten jedoch analog auch für einen "negativen Sprung", bei dem ein niedriger Relativwinkel bzgl. der Kurbelwelle 28 angefahren wird, wobei lediglich die Ausdrücke für die Beziehungen zwischen den Winkelistwerten der verstellten Nockenwellen "höher/überhalb/größer" bzw. "niedriger/unterhalb/kleiner" umzukehren sind.

In einem Block 38 werden die momentanen Winkelistwerte 40, 42 der beiden Nockenwellen 18, 22 aufgenommen und miteinander verglichen sowie jeweilige Verstellgeschwindigkeiten bestimmt. Sobald in Block 38 festgestellt wird, daß die beiden Nockenwellen 18, 22 asynchron laufen, wird bei 44 ein entsprechendes Signal an einen weiteren Block 46 gegeben und der momentane Winkelistwert der Nockenwelle mit höherer Verstellgeschwindigkeit zuzüglich eines Prädiktionswinkels übergeben. Dieser Prädiktionswinkel berücksichtigt ein Nachlaufen des Nockenwellensteller nach Veränderung des Winkelsollwertes.

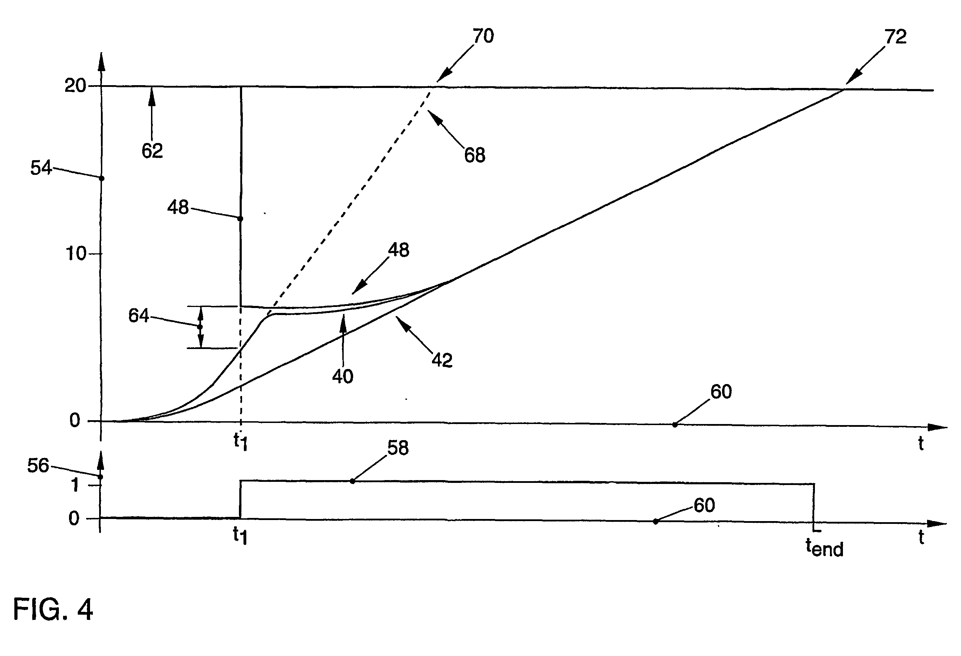

Im Block 46 wird für die Nockenwelle 18 mit höherer Verstellgeschwindigkeit ein über die Zeit veränderter Winkelsollwert 48 generiert. Hierbei wird der veränderte Winkelsollwert 48 derart gewählt, daß sich der momentane Winkelistwert 40 der Nockenwelle 18 mit höherer Verstellgeschwindigkeit wieder dem momentanen Winkelistwert 42 der Nockenwelle 22 mit niedriger Verstellgeschwindigkeit annähert, wie später unter Bezugnahme auf Fig. 4 noch näher erläutert werden wird. Zum Bestimmen des über die Zeit veränderten Winkelsollwert 48 erhält der Block 46 zusätzlich den momentanen Winkelistwert 42 der Nockenwelle 22 mit niedrigster Verstellgeschwindigkeit. Ferner wird aus einem Block 50 über Verbindung 52 eine in Fig. 3 schematisch dargestellte PT1-Funktion zugeführt. Aus einer Summe des Winkelistwertes 42 der Nockenwelle mit niedrigster Verstellgeschwindigkeit und einem momentanen Wert der PT1-Funktion wird in Block 46 der veränderte Winkelsollwert 48 für die Nockenwelle 18 mit höherer Verstellgeschwindigkeit berechnet. Ob der Wert der PT1-Funktion addiert oder subtrahiert wird hängt lediglich davon ab, ob eine Verstellung der Nockenwellen 18, 22 hin zu einem größeren Relativwinkel (positiver Sprung) oder hin zu einem kleineren Relativwinkel (negativer Sprung) bzgl. der Kurbelwelle erfolgt. Die Kenngrößen für die PT1-Funktion werden am Beginn der Veränderung des Winkelsollwertes 48 für die Nockenwelle 18 mit höherer Verstellgeschwindigkeit aus einer Motortemperatur sowie einer Differenz zwischen dem Winkelistwert 42 der Nockenwelle 22 mit niedrigster Verstellgeschwindigkeit und dem Winkelistwert 40 der Nockenwelle 18 mit höherer Verstellgeschwindigkeit zuzüglich dem Prädiktionswinkel berechnet. Die PT1-Funktion variiert über die Zeit, so daß auch der veränderte Winkelsollwert 48 für die Nockenwelle 18 mit höherer Verstellgeschwindigkeit variiert. Hierbei wird das Auseinanderdriften bzw. Divergieren der Winkelistwerte der zu verstellenden Nockenwellen 18, 22 gestoppt, um eine möglichst asymptotische Annäherung des Winkelistwertes 40 der Nockenwelle 18 mit höherer Verstellgeschwindigkeit an den Winkelistwert 42 der Nockenwelle 22 mit niedrigster Verstellgeschwindigkeit zu erzielen. Die Veränderung des Winkelsollwertes 48 für die Nockenwelle 18 mit höherer Verstellgeschwindigkeit und damit die Angleichung bzw. Synchronisation der Winkelistwerte 40 der Nockenwelle 18 mit höherer Verstellgeschwindigkeit an die Winkelistwerte 42 der Nockenwelle 22 mit niedrigster Verstellgeschwindigkeit erfolgt dabei so lange, bis die beiden Nockenwellen 18, 22 den ursprünglichen Winkelsollwert, welcher nach wie vor für die Nockenwelle 22 mit niedrigster Verstellgeschwindigkeit gilt, erreicht haben. Es sind lediglich Abbruchbedingungen aus Plausibilitätsgründen vorgesehen. So kann beispielsweise die Veränderung des Winkelsollwertes 48 gestoppt und ein Rücksetzen auf den ursprünglichen Winkelsollwert erfolgen, wenn der momentane Winkelistwert 42 der Nockenwelle 22 mit niedrigster Verstellgeschwindigkeit in Richtung ursprünglicher Winkelsollwert über den veränderten Winkelsollwert 48 hinaus ansteigt. Dies bedeutet nämlich, daß nun die ursprünglich als langsamer verstellend identifizierte Nockenwelle die Nockenwelle mit höherer Verstellgeschwindigkeit ist. Dies kann einerseits in Veränderungen von Systemparametern während der Verstellung oder in einer fehlerhaften Identifikation am Anfang der Veränderung des Winkelsollwertes 48 liegen. So ist es eine Eigenart von hydraulischen Betätigungen, daß diese Hafteffekten unterliegen, so daß die eigentlich schneller verstellende Nockenwelle 18 zunächst am Beginn der Verstellung zum neuen Winkelsollwert hin mit ihren Winkelistwerten 40 jeweils unterhalb den Winkelistwerten 42 der eigentlich langsamer verstellenden Nockenwelle 22 bleibt, bis die hydraulische Kraft eine Haftkraft überwindet und schließlich die Winkelistwerte 40 der schneller verstellenden Nockenwelle 18 die Winkelistwerte 42 der langsamer verstellenden Nockenwelle 22 in Richtung ursprünglicher Winkelsollwert überholen.

Fig. 4 veranschaulicht graphisch den zeitlichen Verlauf der Winkelistwerte 40, 42 der Einlaßnockenwellen 18, 22 während der Verstellung mit gleichzeitiger Synchronisation. Auf der vertikalen Achse 54 ist der relative Winkel zur Kurbelwelle in °KW aufgetragen. Ferner ist auf der vertikalen Achse 56 ein Signal 58 dargestellt, welches die Erkennung eines asynchronen Laufes (unterschiedliche Verstellgeschwindigkeiten) der zu verstellenden Nockenwellen 18, 22 anzeigt. Ferner ist auf der jeweiligen horizontalen Achse 60 die Zeit t aufgetragen.

Zum Zeitpunkt t=0 beträgt der relative Winkel der Nockenwellen 18, 22 bzgl. der Kurbelwelle 0 °KW und es erfolgt ein Sprung auf einen neuen Winkelsollwert 62 von 20 °KW, welcher nachfolgend als "ursprünglicher Winkelsollwert" bezeichnet wird. Dieser ursprüngliche Winkelsollwert 62 gilt zunächst für beide Nockenwellen 18, 22 bzw. deren jeweilige Nockenwellensteller 24. Da bei niedrigen Temperaturen, beispielsweise während einer Kaltstartphase, jedoch die Nockenwelle 18 der ersten Zylinderbank 12 eine höhere Verstellgeschwindigkeit in Richtung des ursprünglichen Winkelsollwertes 62 aufweist als die Nockenwelle 22 der zweiten Zylinderbank 16 bzw. der Nockenwellensteller, divergieren die Winkelistwerte 40, 42 der beiden Nockenwellen 18, 22 auseinander. Die Winkelistwerte 40 der schnelleren Nockenwelle 18 nähern sich dem ursprünglichen Winkelsollwert 62 schneller als die Winkelistwerte 42 der langsameren Nockenwelle 22. Dies bleibt so bis zum Zeitpunkt t₁. Hier hat die Differenz zwischen den Winkelistwerten 40, 42 eine vorbestimmte Schwelle überschritten und es erfolgt eine aktive Synchronisation der beiden Nockenwellen 18, 22. Hierbei wird die schnellere Nockenwelle 18 abgebremst.

Hierzu wird der Winkelsollwert 48 für die schnellere Nockenwelle 18 verändert und zwar in Richtung des Ausgangswinkels zum Zeitpunkt t=0 (0°KW) verschoben. Bei dem dargestellten positiven Sprung wird der ursprüngliche Winkelsollwert 62 auf den veränderten Winkelsollwert 48 für die Nockenwelle 18 mit höherer Verstellgeschwindigkeit reduziert, während für die Nockenwelle 22 mit niedrigster Verstellgeschwindigkeit weiterhin der ursprüngliche Winkelsollwert 62 gültig bleibt. Der veränderte Winkelsollwert 48 zum Zeitpunkt t₁ setzt sich zusammen aus dem momentanen Winkelistwert 40 der Nockenwelle 18 mit höherer Verstellgeschwindigkeit plus einem Prädiktionswinkel 64, welcher ein Nachlaufen des Nockenwellenstellers 24 der Nockenwelle 18 mit höherer Verstellgeschwindigkeit nach dem Reduzieren des Winkelsollwertes 62 auf den veränderten Winkelsollwert 48 berücksichtigt. Dies verhindert ein Schwingen des Winkelistwertes 40 der schnelleren Nockenwelle 18 um den veränderten Winkelsollwert 48. Der veränderte Winkelsollwert 48 für die Nockenwelle 18 mit höherer Verstellgeschwindigkeit wird dabei so bestimmt, daß er zu jedem Zeitpunkt während der Verstellung der Nockenwellen 18, 22 zwischen dem ursprünglichen Winkelsollwert 62 und dem Winkelistwert 42 der langsameren Nockenwelle 42 liegt.

Der veränderte Winkelsollwert 48 wird nun, wie unter Bezugnahme auf Fig. 2 zuvor erläutert, im Zeitraum zwischen t₁ und t_{end} unter Verwendung der PT1-Funktion und dem Winkelistwert 42 der langsameren Nockenwelle 22 berechnet. Diese Summe wird dann als veränderter Winkelsollwert 48 gesetzt, wenn sie größer ist als der Winkelistwert 40 der schnelleren Nockenwelle 18 am Beginn der Synchronisation zum Zeitpunkt t₁. Hierdurch ergibt sich zunächst ein Stoppen der Divergenz der Winkelistwerte 40, 42 und anschließend eine wieder Annäherung des Winkelistwertes 40 an den Winkelistwert 42. Mit anderen Worten wird durch die Vorgabe unterschiedlicher Winkelsollwerte 62 bzw. 48 für die asynchron laufenden Nockenwellen 18, 22 eine Synchronisation bzw. ein Gleichlauf der Nockenwellen 18 und 22 mit geringem Unterschied der jeweiligen relativen Winkellage zur Kurbelwelle 28 erzielt. Wie in Fig. 4 dargestellt, wird dazu der Winkelsollwert 48 für die schnellere Nockenwelle 18 entsprechend über die Zeit nachgeführt. Diese Nachführung endet zum Zeitpunkt t_{end}, was durch ein Rücksetzen des Signals 58 angezeigt wird.

Zum Vergleich ist mit gestrichelte Linie 68 der Verlauf des Winkelistwertes 40 ohne erfindungsgemäße Synchronisation eingezeichnet. Hierbei würde der Winkelistwert 40 der Nockenwelle 18 mit höherer Verstellgeschwindigkeit den ursprünglichen Winkelsollwert 62 bereits bei 70 erreichen, während der Winkelistwert 42 der Nockenwelle 22 mit niedrigster Verstellgeschwindigkeit den ursprünglichen Winkelsollwert 62 erste bei 72 erreicht. In der Zeit zwischen t₁ und t_{end} driften also die relativen Winkelstellungen der Nockenwellen 18 und 22 bzgl. der Kurbelwelle 28 ohne Synchronisation in unerwünschter Weise erheblich auseinander.

Der Zeitpunkt t₁, bei dem die Veränderung des Winkelsollwertes 48 für die schnellere Nockenwelle 18 beginnt, ist dabei nicht starr gewählt, sondern variabel, da das Einsetzen der Synchronisation durch die Differenz zwischen den Winkelistwerten 40, 42 bestimmt wird. Dies stellt sicher, daß auch wirklich eine Nockenwelle schneller verstellt wird als die andere und nicht lediglich kleine Fluktuationen in den Verstellgeschwindigkeiten auftreten. Der Zeitpunkt t₁ kann beispielsweise bei 50 ms, bei hoher Differenz der Verstellgeschwindigkeiten, oder erst bei 200 ms bei niedriger Differenz der Verstellgeschwindigkeiten der zu verstellenden Nockenwellen 18 und 22 liegen.

## Patentansprüche

1. Verfahren zum gleichzeitigen Verstellen von Nockenwellen verschiedener Zylinderbänke einer Brennkraftmaschine relativ zu einer Kurbelwelle auf einen vorbestimmten Winkelsollwert, wobei die Nockenwellen jeweilige Ein- bzw. Auslaßventile entsprechender Zylinderbänke der Brennkraftmaschine betätigen, **dadurch gekennzeichnet, daß** eine Differenz von Verstellgeschwindigkeiten jeweiliger Winkelistwerte der Nockenwellen erfaßt wird und der Winkelsollwert wenigstens einer Nockenwelle mit höherer Verstellgeschwindigkeit zeitlich verändert wird bis die Winkelistwerte der Nockenwellen den ursprünglichen Winkelsollwert erreicht haben, wobei die zeitliche Veränderung des Winkelsollwertes für die Nockenwelle mit höherer Verstellgeschwindigkeit derart erfolgt, daß eine Divergenz von Winkelistwerten zwischen der Nockenwelle mit höherer Verstellgeschwindigkeit und derjenigen Nockenwelle mit niedrigster Verstellgeschwindigkeit gestoppt und eine entsprechende Differenz zwischen diesen Winkelistwerten verringert wird.

2. Verfahren nach Anspruch 1, **dadurch gekennzeichnet, daß** die Veränderung des Winkelsollwertes erst ab einem Zeitpunkt durchgeführt wird, bei dem sich zwischen den Winkelistwerten der Nockenwelle mit höherer Verstellgeschwindigkeit und der Nockenwelle mit niedrigster Verstellgeschwindigkeit eine vorbestimmte Differenz einstellt.

3. Verfahren nach Anspruch 1 oder 2, **dadurch gekennzeichnet, daß** die Veränderung des Winkelsollwertes derart erfolgt, daß eine Differenz zwischen dem Winkelistwert der Nockenwellen zu Beginn der Verstellung und dem veränderten Winkelsollwert im Betrag kleiner ist als eine Differenz zwischen dem Winkelistwert der Nockenwellen zu Beginn der Verstellung und dem ursprünglichen Winkelsollwert.

4. Verfahren nach wenigstens einem der vorhergehenden Ansprüche, **dadurch gekennzeichnet, daß** am Beginn der Veränderung des Winkelsollwertes dieser auf den momentanen Winkelistwert der Nockenwelle mit höherer Verstellgeschwindigkeit als Anfangswert gesetzt wird.

5. Verfahren nach Anspruch 4, **dadurch gekennzeichnet, daß** dem momentanen Winkelistwert der Nockenwelle mit höherer Verstellgeschwindigkeit ein Prädiktionswinkel hinzu addiert wird, der einem Nachlaufen des Winkelistwertes der Nockenwelle mit höherer Verstellgeschwindigkeit nach dem ersten Verändern des Winkelsollwertes für diese Nockenwelle mit höherer Verstellgeschwindigkeit entspricht.

6. Verfahren nach Anspruch 4 oder 5, **dadurch gekennzeichnet, daß** der veränderte Winkelsollwert in seinem Betrag als Summe aus dem momentanen Winkelistwert der Nockenwelle mit niedrigster Verstellgeschwindigkeit und einer zeitabhängigen Funktion bestimmt wird, deren Betrag sich mit der Zeit einer vorbestimmten Konstanten nähert.

7. Verfahren nach Anspruch 6, **dadurch gekennzeichnet, daß** als zeitabhängige Funktion eine PT1-Funktion verwendet wird.

8. Verfahren nach Anspruch 7, **dadurch gekennzeichnet, daß** Kenngrößen der PT1-Funktion am Beginn der Veränderung des Winkelsollwertes in Abhängigkeit von einer Temperatur der Brennkraftmaschine und einem Anfangswert des veränderten Winkelsollwertes bestimmt werden.

9. Brennkraftmaschine (10) mit wenigstens zwei Zylinderbänken (12,14) und einer Ventilsteuerung für jede Zylinderbank (12,14) mit jeweils wenigstens einer Nockenwelle (16, 18, 20, 22) zum Betätigen von Auslaß- und/oder Einlaßventilen der jeweiligen Zylinderbank (12,14), wobei jeweils wenigstens eine Nockenwelle (16, 18, 20, 22) einer Zylinderbank (12,14) mittels eines Nockenwellenstellers (24) in ihrem Winkel bzgl. einer Kurbelwelle (28) der Brennkraftmaschine (10) verstellbar ist, wobei ein Steuergerät (32) vorgesehen ist, welches die Verstellung der Nockenwellen (16, 18, 20, 22) in Abhängigkeit von einem vorbestimmten Winkelsollwert (62) ausführt, **dadurch gekennzeichnet, daß** das Steuergerät (32) derart ausgebildet ist, daß es eine Differenz von Verstellgeschwindigkeiten der Nockenwellensteller (24) erfaßt und den Winkelsollwert (48) wenigstens eines Nockenwellenstellers (24) mit höherer Verstellgeschwindigkeit zeitlich verändert bis die Nockenwellensteller (24) den ursprünglichen Winkelsollwert (62) erreicht haben, wobei die zeitliche Veränderung des Winkelsollwertes (48) für den Nockenwellensteller (24) mit höherer Verstellgeschwindigkeit derart erfolgt, daß eine Divergenz von Winkelistwerten (40,42) zwischen dem Nockenwellensteller mit höherer Verstellgeschwindigkeit und demjenigen Nockenwellensteller mit niedrigster Verstellgeschwindigkeit stoppt und sich eine entsprechende Differenz zwischen diesen Winkelistwerten (40, 42) verringert.

## Claims

1. Method for the simultaneous adjustment of camshafts of various cylinder banks of an internal combustion engine in relation to a crankshaft to a predetermined desired angle value, the camshafts actuating respective inlet and outlet valves of corresponding cylinder banks of the internal combustion engine, **characterized in that** a difference between adjustment speeds of respective actual angle values of the camshafts is detected, and the desired angle value of at least one camshaft with a higher adjustment speed is varied in time, until the actual angle values of the camshafts have reached the original desired angle value, the time variation of the desired angle value for the camshaft with the higher adjustment speed taking place in such a way that a divergence of actual angle values between the camshaft with the higher adjustment speed and that camshaft with the lowest adjustment speed is stopped and a corresponding difference between these actual angle values is reduced.

2. Method according to Claim 1, **characterized in that** the variation of the desired angle value is carried out only from a time point at which a predetermined difference is established between the actual angle values of the camshaft with the higher adjustment speed and the camshaft with the lowest adjustment speed.

3. Method according to Claim 1 or 2, **characterized in that** the variation of the desired angle value takes place in such a way that a difference between the actual angle value of the camshafts at the start of adjustment and the varied desired angle value is smaller in amount than a difference between the actual angle value of the camshafts at the start of adjustment and the original desired angle value.

4. Method according to at least one of the preceding claims, **characterized in that**, at the start of the variation of the desired angle value, the latter is set at instantaneous actual angle value of the camshaft with the higher adjustment speed as initial value.

5. Method according to Claim 4, **characterized in that** the instantaneous actual angle value of the camshaft with the higher adjustment speed has added to it a prediction angle which corresponds to a tracking of the actual angle value of the camshaft with the higher adjustment speed after the first variation of the desired angle value for this camshaft with the higher adjustment speed.

6. Method according to Claim 4 or 5, **characterized in that** the varied desired angle value is determined in amount as the sum of instantaneous actual angle value of the camshaft with the lowest adjustment speed and of a time-dependent function, the amount of which with time approximates to a predetermined constant.

7. Method according to Claim 6, **characterized in that** the time-dependent function used is a PT1 function.

8. Method according to Claim 7, **characterized in that** characteristic quantities of the PT1 function are determined, at the start of the variation of the desired angle value, as a function of a temperature of the internal combustion engine and of an initial value of the varied desired angle value.

9. Internal combustion engine (10) with at least two cylinder banks (12, 14) and with a valve control for each cylinder bank (12, 14), in each case having at least one camshaft (16, 18, 20, 22) for the activation of outlet and/or inlet valves of the respective cylinder bank (12, 14), in each case at least one camshaft (16, 18, 20, 22) of a cylinder bank (12, 14) being adjustable in its angle with respect to a crankshaft (28) of the internal combustion engine (10) by means of a camshaft adjuster (24), a control apparatus (32) being provided, which executes the adjustment of the camshafts (16, 18, 20, 22) as a function of a predetermined desired angle value (62), **characterized in that** the control apparatus (32) is designed in such a way that it detects a difference between adjustment speeds of the camshaft adjusters (24) and varies in time the desired angle value (48) of at least one camshaft adjuster (24) with the higher adjustment speed, until the camshaft adjusters (24) have reached the original desired angle value (62), the time variation of the desired angle value (48) for the camshaft adjuster (24) with the higher adjustment speed taking place in such a way that a divergence of actual angle values (40, 42) in the camshaft adjuster with the higher adjustment speed and that camshaft adjuster with the lowest adjustment speed stops and a corresponding difference between these actual angle values (40, 42) is reduced.

## Revendications

1. Procédé de décalage simultané d'arbres à cames de différentes rangées de cylindres d'un moteur à combustion interne par rapport à un vilebrequin, d'une valeur angulaire de consigne prédéterminée, les arbres à cames actionnant des soupapes d'admission et d'échappement respectives de rangées de cylindres correspondantes du moteur à combustion interne, **caractérisé en ce qu'**une différence de vitesses de décalage de chaque valeur angulaire réelle des arbres à cames est détectée et la valeur angulaire de consigne d'au moins un arbre à cames de vitesse de décalage supérieure est modifiée dans le temps jusqu'à ce que les valeurs angulaires réelles des arbres à cames aient atteint la valeur angulaire de consigne d'origine, la modification dans le temps de la valeur angulaire de consigne pour l'arbre à cames de vitesse de décalage supérieure s'effectuant de telle sorte qu'une divergence de valeurs angulaires réelles entre l'arbre à cames de vitesse de décalage supérieure et l'arbre à cames de vitesse de décalage inférieure soit éliminée et qu'une différence correspondante entre ces valeurs angulaires réelles soit réduite.

2. Procédé selon la revendication 1, **caractérisé en ce que** la modification de la valeur angulaire de consigne n'est effectuée qu'à partir d'un instant auquel une différence prédéterminée s'ajuste entre les valeurs angulaires réelles de l'arbre à cames de vitesse de décalage supérieure et l'arbre à cames de vitesse de décalage inférieure.

3. Procédé selon la revendication 1 ou 2, **caractérisé en ce que** la modification de la valeur angulaire de consigne a lieu de telle sorte qu'une différence entre la valeur angulaire réelle des arbres à cames au début du décalage et la valeur angulaire de consigne modifiée soit inférieure en valeur à une différence entre la valeur angulaire réelle des arbres à cames au début du décalage et la valeur angulaire de consigne d'origine.

4. Procédé selon au moins l'une quelconque des revendications précédentes, **caractérisé en ce qu'**au début de la modification de la valeur angulaire de consigne, celle-ci est mise à la valeur angulaire réelle instantanée de l'arbre à cames de vitesse de décalage supérieure en tant que valeur initiale.

5. Procédé selon la revendication 4, **caractérisé en ce que** l'on ajoute à la valeur angulaire réelle instantanée de l'arbre à cames de vitesse de décalage supérieure un angle de prédiction qui correspond à un déport de la valeur angulaire réelle de l'arbre à cames de vitesse de décalage supérieure après la première modification de la valeur angulaire de consigne pour cet arbre à cames de vitesse de décalage supérieure.

6. Procédé selon la revendication 4 ou 5, **caractérisé en ce que** la valeur angulaire de consigne modifiée est déterminée en valeur en tant que somme de la valeur angulaire réelle instantanée de l'arbre à cames de vitesse de décalage inférieure et d'une fonction dépendant du temps, dont la valeur s'approche d'une constante prédéterminée en fonction du temps.

7. Procédé selon la revendication 6, **caractérisé en ce que** l'on utilise comme fonction dépendant du temps une fonction PT1.

8. Procédé selon la revendication 7, **caractérisé en ce que** des valeurs caractéristiques de la fonction PT1 sont déterminées au début de la modification de la valeur angulaire de consigne en fonction d'une température du moteur à combustion interne et d'une valeur initiale de la valeur angulaire de consigne modifiée.

9. Moteur à combustion interne (10) comprenant au moins deux rangées de cylindres (12, 14) et une commande de soupapes pour chaque rangée de cylindres (12, 14) comprenant à chaque fois au moins un arbre à cames (16, 18, 20, 22) pour l'actionnement de soupapes d'échappement et/ou d'admission de chaque rangée de cylindres (12, 14), à chaque fois au moins un arbre à cames (16, 18, 20, 22) d'une rangée de cylindres (12, 14) pouvant être décalé angulairement au moyen d'un actionneur d'arbre à cames (24) par rapport à un vilebrequin (28) du moteur à combustion interne (10), un appareil de commande (32) étant prévu, lequel effectue le décalage des arbres à cames (16, 18, 20, 22) en fonction d'une valeur angulaire de consigne prédéterminée (62), **caractérisé en ce que** l'appareil de commande (32) est réalisé de telle sorte qu'il détecte une différence de vitesses de décalage des actionneurs d'arbre à cames (24) et modifie dans le temps la valeur angulaire de consigne (48) d'au moins un actionneur d'arbre à cames (24) de vitesse de décalage supérieure, jusqu'à ce que les actionneurs d'arbre à cames (24) aient atteint la valeur angulaire de consigne d'origine (62), la modification dans le temps de la valeur angulaire de consigne (48) pour l'actionneur d'arbre à cames (24) de vitesse de décalage supérieure s'effectuant de telle sorte qu'une divergence de valeurs angulaires réelles (40, 42) entre l'actionneur d'arbre à cames de vitesse de décalage supérieure et l'actionneur d'arbre à cames de vitesse de décalage inférieure soit éliminée et qu'une différence correspondante entre ces valeurs angulaires réelles (40, 42) soit réduite.
